# EUROPÄISCHE PATENTSCHRIFT

(11) **EP 1 433 768 B1**
(45) Veröffentlichungstag und Bekanntmachung des Hinweises auf die Patenterteilung: **31.08.2005**
(21) Anmeldenummer: 02028433.7
(22) Anmeldetag: 18.12.2002
(51) Int. Cl.: C04B 40/00, C04B 38/02, C04B 28/02

(54) **Porenbildendes Betonzusatzmittel**
Pore-forming additive for concrete
Additif formant des pores pour béton

(43) Veröffentlichungstag der Anmeldung: 30.06.2004
(73) Patentinhaber: Hydroment GmbH, 86807 Buchloe (DE)
(72) Erfinder:
(74) Vertreter: Becker Kurig Straus

(56) Entgegenhaltungen:
- WO-A-01/68549
- AT-B- 383 586
- US-A- 6 075 075
- "CHEMICAL ABSTRACTS + INDEXES, AMERICAN CHEMICAL SOCIETY. COLUMBUS, US" , CHEMICAL ABSTRACTS + INDEXES, AMERICAN CHEMICAL SOCIETY. COLUMBUS, US XP000185872 ISSN: 0009-2258 * Zusammenfassung *
- "CHEMICAL ABSTRACTS + INDEXES, AMERICAN CHEMICAL SOCIETY. COLUMBUS, US" , CHEMICAL ABSTRACTS + INDEXES, AMERICAN CHEMICAL SOCIETY. COLUMBUS, US XP000183847 ISSN: 0009-2258 * Zusammenfassung *

## Beschreibung

Die vorliegende Erfindung betrifft eine neuartige Additiv-Kombination für porenbildende Baustoffe, insbesondere luftporenbildende Baustoffe, auf Betonbasis. Mit dieser neuen Additiv-Kombination können außergewöhnlich homogene Mikroporen-Betone oder Styroporbetone hergestellt werden.

Die Erfindung betrifft weiterhin aus diesen Baustoffen hergestellbare Bauelemente, wie z. B. (tragende) Wandteile, Styroporbetonwände, Schalldämmelemente, Kellerwände, Wandfertigteile, Deckenelemente, aber auch zum Beispiele Estriche.

Für die Herstellung von Beton mit hoher Frost- und Taumittelbeständigkeit ist es schon seit langem bekannt luftporenbildende Betonzusatzmittel einzusetzen. Dabei werden hauptsächlich Mittel auf Basis von Sulfitablauge eingesetzt, die bei der Herstellung von Zellstoff anfallen oder es werden derartige Mittel auf Basis von Tensiden verwendet. Weiterhin werden aber auch Formaldehydschaumkondensate (DD-WP 52393), Polyacrylamid (DE-OS 2149441) oder mittels Kohlenwasserstoffen hydrophobierte Silikatschichten (DE-OS 2923939) werden im Stand der Technik beschrieben. Nachteilig ist, dass die luftporenbildende Wirkung mit zunehmender Lagerungsdauer abnimmt. Hierdurch ergeben sich Probleme bei der optimalen Dosierung dieser Mittel an der Mischanlage.

DD-287 841 beschreibt weiterhin ein luftporenbildendes Betonzusatzmittel, welches 20 bis 70 Volumenteile des bei der destillativen Aufbereitung mittels Fallfilmverdampfers unter Vakuum aus natürlichen Fetten gewonnenen Glycerins anfallenden Sumpfproduktes, 0,1 bis 5 Volumenteile nichtionogener Tenside und 25 bis 79,9 Volumentelle Wasser enthält, wobei der pH-Wert der Mischung 3,5 bis 5,5 betragen soll. Das nichtionogene Tensid ist ein Fettalkoholpolyglykolether mit Kettenlängen von C₁₂ bis C₁₈ und enthält 5 bis 10 Ethylenoxidgruppen.

Weiterhin ist bekannt, dass zementgebundene Baustoffe wie z. B. Beton, hohe Belastungen aufnehmen und auch hohe Druckfestigkeiten erreichen können. Aus Beton hergestellte Bauteile weisen ein hohes Eigengewicht auf und daher ist der Transport von Bauteilen teilweise sehr kostspielig. Weiterhin weisen zementgebundene Baustoffe wie Beton eine schlechte Wärmedämmung, schlechte Wasserdampfdiffusion und eine schlecht Bearbeitbarkeit auf (Einschlagen von Eisennägeln in Betonwände- und Decken ist bekanntlich nicht möglich).

Es ist daher Aufgabe der vorliegenden Erfindung, ein porenbildendes Betonzusatzmittel bzw. einen Wandbaustoff anzugeben, der aus einem homogenen Material besteht, diffusionsoffen ist sowie Wasserdampf aufnehmen kann, als auch wieder abgeben kann. Weiterhin soll ein hoher Luftporenanteil und eine hohe Wärmedämmfähigkeit im fertigen Bauelement, welches gleichzeitig eine gute Bearbeitbarkeit aufweisen soll, erzielt werden. Dabei ist ebenfalls zu berücksichtigen, dass alle einschlägigen Normen eingehalten werden.

Diese Aufgabe wird durch das porenbildende Betonzusatzmittel, welches oberflächenaktive Mittel enthält, gemäß Anspruch 1 gelöst. Das erfindungsgemäße porenbildende Zusatzmittel enthält eine Wirkstoffkombination aus folgenden Komponenten:
(a) 10 bis 50 Gew.-% an anionischen Na-Salzen von Alkylnaphthalinsulfonsäuren,
(b₁) 20 bis 75 Gew.-% an Natrium-Salzen von Alkylpheloläthersulfat und/oder Alkylbenzolsulfonat oder
(b₂) 20 bis 75 Gew.-% an Natrium Salzen von sulfatiertem C₁₂ bis C₁₅-Oxoalkoholpolyglykoläther,
(c) 10 bis 40 Gew.-% an einem einem Styrolmischpolymer mit einer Säurezahl von 5 bis 15, wie es zur Herstellung von wäßrigen Kunstoffdispersionen geeignet ist,
(d) 10 bis 35 Gew.-% eines Formaldehyd-Melamin-Na-Hydrogensulfit-Copolymers.

Gegebenenfalls können weiterhin die Komponenten:
(e) 7 bis 15 Gew.-% einer leimfreien hochkonzentrierten Paraffindispersion (als Hydrophobierungsmittel), und/oder
(f) 7 bis 15 Gew.-% an Natrium-Salzen eines Naphthalinsulfonsäure-FormaldehydKondensationsproduktes dem Betonzusatzmittel zugesetzt sein.

In einer besonderen Ausführungsform der Erfindung werden die Komponente (a), (b), (c), (d), ggf. (f), jeweils in feinpulvriger, trockener Form eingesetzt.

Die Komponente (c) besteht vorzugsweise aus einem butadienfreien Styrolmischpolymer mit einer Säurezahl von 5 bis 15. Besonders bevorzugt besteht die Komponente (c) aus Styrol-/Acrylsäure-Mischpolymer oder Styrol-/Acrylsäureester-/Acrylsäure-Mischpolymer mit einer Säurezahl von 8 bis 12.

In einer besonderen Ausführungsform der Erfindung umfasst das Betonzusatzmittel die Komponenten (a) 30 bis 40 Gew.-%, die Komponenten (b₁) oder (b₂) 40 bis 60 Gew.-%, die Komponente (c) 10 bis 20 Gew.-%, die Komponente (d) 10 bis 35 Gew.-% und gegebenenfalls die Komponente (f) 7 bis 15 Gew.-%.

Weiterhin kann das erfindungsgemäße Betonzusatzmittel mit weiteren inerten Trägern verdünnt sein.

Die vorliegende Erfindung betrifft weiterhin einen porenbildenden Baustoff auf Betonbasis, umfassend ein Gemisch von Zement und Betonzuschlagsstoff und dem Betonzusatzmittel. Auf 100 kg eines Gemisches aus Zement und Betonzuschlag, insbesondere Sand, kommen 40 bis 1000 g des erfindungsgemäßen Zusatzmittels mit den Komponenten (a) bis (d) und (f) bzw. (a) bis (f) (vgl. Anspruch 7) pro 100 kg des Gemisches aus Zement und Zuschlagsstoff.

In den Unteransprüchen sind weiterhin vorteilhafte Ausführungsformen der Erfindung enthalten.

Die Erfindung betrifft aber schließlich auch aus dem porenbildenden Baustoff herstellbare Bauelemente, wie z. B. tragende Wandteile, Kellerwände, Wandfertigteile wie Massivwände, Doppelschallwandungen, Sandwichplatten, Schallschutzwände und Deckenelemente, aber auch Ausgleichsdämmbeton (Estrichstyroporbeton), Fülldämmbeton (Doppelschalwandungen ausgiessen), Wanddämmelemente (Styroporbetonwände).

Das erfindungsgemäße porenbildende Betonzusatzmittel ist eine hochkonzentrierte Mischung aus verschiedenen Additiven (a) bis (d), (f) und gegebenenfalls (e) und Wirkstoffen im festen, sillikatischen Trägermaterial.

Das erfindungsgemäße Betonzusatzmittel erzeugt im frischen Beton eine hohe Konzentration von stabilen Poren bzw. Luftporen. Dies erfolgt beim Anmischen durch einen autokatalytischen Prozeß, bei dem keine Gase wie Sauerstoff, Wasserstoff oder Kohlendioxid freigesetzt werden.

Der Reaktionsmechanismus ist praktisch temperaturunabhängig, so dass er sehr gut reproduziert werden kann.

Beim Erhärten entstehen Betone mit einem definierten Gehalt von feinen und feinsten Lufteinschlüssen. Dies ermöglicht die Herstellung von Bauteilen mit hoher Qualität und besonders gleichmäßigen Eigenschaften.

Die Wirkung des erfindungsgemäßen Betonzusatzmittel geht über einfache Mischungen von Luftporen- und Schaumbildnern weit hinaus. Deren Vorteile werden kombiniert, die Nachteile vermieden und zusätzliche Leistungsparameter hinzugefügt. Insgesamt lässt sich als besonders vorteilhafter Effekt durch das erfindungsgemäße Zusatzmittel erzielen, dass ein besonders homogenes Mischgut entsteht und kein Entmischen der Bestandteile, d. h. kein Ausbluten mehr gegeben ist, wie es häufig beim Stand der Technik zu beobachten ist.

Das erfindungsgemäße Betonzusatzmittel wird zur Herstellung von Microporenbetonen verwendet. Dazu kommen neben Portlandzement (wie z. B. CEM I 42,5 R, CEM I 52,5 R, CEM II 52,5 A-L) verschiedene Zuschläge und Zuschlagsgemische zum Einsatz.

Als charakteristische Eigenschaft haben die so hergestellten Betone Luftporengehalte von 20 Vol.-% bis über 40 Vol.-%.

Im einfachsten Fall wird ein Microporen-Beton aus Zement, Quarzsand, dem erfindungsgemäßen Betonzusatzmittel und Wasser angemischt. In höherwertigen Mischungen ist der Quarzsand ganz oder teilweise durch organische und/oder anorganische Leichtzuschläge ersetzt (z. B. Styropor, Blähglas/, Blähton, Holzspäne usw.).

Das im Styroporbeton eingesetzte Polystyrol kann auch flammhämmend ausgerüstet sein. Hierzu können alle dem Fachmann bekannten Flammschutzmittel wie z. B. Pyrocheck 68 B ® eingesetzt werden.

Je nach Formulierung können mit dem erfindungsgemäßen Betonzusatzmittel hergestellte Microporen-Betone diese technischen Eigenschaften erreichen:
- sehr gut pumpbar und fließfähig,
- schwindarm aushärtend;
- Kein Ausbluten und kein Separieren der Zuschläge; dadurch zuverlässig und sicher anzuwenden; weniger Ausschuß.
- Je nach Formulierung Rohdichten von 1,2-2,0 kg/dm³ bei Druckfestigkeiten bis 45 N/mm² (LC35/38) und einem Luftporengehalt von 20-40 Vol.-%.
- Niedrigere Rohdichten durch Mischungen aus Sand und/oder Leichtzuschlägen (z. B. Styroporbeton 0,22-0,70 kg/dm³).
- Bei vergleichbaren technischen Eigenschaften bis 25 % weniger Gewicht und bis zu 20 % weniger Rohstoffeinsatz pro m³ im Vergleich zu Normalbetonen.
- Nicht brennbar.
- Umweltneutral wie andere Betone.
- Großes Porenvolumen von 30-80 Vol.-%.
- Dabei im Vergleich zu einfachen Luftporenbildnern hoher Anteil an Fein- und Feinstporen in der Betonmatrix.
- Deshalb niedriger Diffusionswiderstand gegenüber Wasserdampf ohne merkliche Salzleinwanderung.
- Hohe Wärmeisolation / geringe Wärmeleitfähigkeit.
- Verbesserung des W/Z-Wertes, dadurch geringere Wasserbindung und Verkürzung des Trocknungsverhaltens.

Erfindungsgemäß ergeben sich dann in bevorzugten Ausführungsformen folgende Anwendungen:
1. Leichtbeton allein mit Sandzuschlag hergestellt, bei einer Rohdichte von 1,2- 2,0 kg/dm³ bei einer Druckfestigkeit von bis zu 45 N/mm² bei einem Luftporengehalt von 20 - 40 Vol.-%.
2. Gefügedichter Beton mit 25 Vol.-% Luftporen, einer Rohdichte von 1,15 kg/dm³ und einer Druckfestigkeit von mehr als 15 N/mm².
3. Pumpbarer und fließfähiger Beton mit Styropor-Zusatz, Rohdichte 0,25 - 0,70 kg/dm³, Druckfestigkeit 0,4 - 6,0 N/mm².

Die Eigenschaften des mit dem erfindungsgemäßen Zusatzmittel hergestellten Betons sind:
- spezielles Mikroporengefüge,
- geringes Eigengewicht der Bauteile,
- geringes Transportgewicht der Bauteile,
- gute Wärmedämmung,
- gute Wasserdampfdiffusion,
- geringer Materialschwund,
- gute Bearbeitbarkeit des Betons, d. h. Nageleinschlagen z. B. möglich.
- Verbesserung des W/Z- Wertes (Wasser/Zement- Wertes)

Im Sinne der Erfindung wird unter dem Begriff "Alkyl" vorzugsweise C₁ bis C₆ Alkyl (verzweigt oder gradkettig) verstanden, während der Ausdruck "Äther" oder "Polyglykol" sich vorzugsweise auf Polyoxyäthylenäther bezieht.

Ein praktischer Ansatz einer bevorzugten erfindungsgemäßen Ausführungsform ist wie folgt:
21,62 Gew.-% Natriumsalz von Diisobuthylnaphtalinsulfonsäure [Komponente (a)],
29,73 Gew.-% Natriumsalz von sulfatiertem C₁₂ - C₁₅ Oxoalkoholpolyglykoläther [Komponente (b₂)],
8,1 Gew.-% feinpulvriges Styrol-Acrylsäure-Mischpolymerisat bzw. Styrol-Acrylester-Acrylsäure-Mischpolymerisat mit einer Säurezahl von 8 bis 12 [Komponente (c)],
40,54 Gew.-% Formaldehyd-Melamin-Natrium-Hydrogensulfit-Copolymer [Komponente (d)].

Von diesem Zusatzpräparat werden 50,3 g auf 100 kg Gemisch Sand und Portlandzement verwendet.

Bei der erfindungsgemäß eingesetzten Komponente (d) handelt es sich um ein rieselfähiges Pulver, dass durch Sprühtrocknung eines sulfonierten Polykondesationsprodukts auf Basis von Melamin hergestellt wurde. Insbesondere handelt es sich um ein Formaldehyd-Melamin-Natrium-Hydrogensulfit-Copolymer mit der CAS-Nr.64787-97-9.

Die Erfindung wird nun anhand der folgenden Beispiele näher beschrieben, ohne sie jedoch darauf zu beschränken.

### Beispiel 1 (erfindungsgemäß)

Es wird ein erfindungsgemäßer Microporenbeton mit der Bezeichnung Hydrotherm® S hergestellt unter Verwendung des erfindungsgemäßen Betonzusatzmittels mit den Komponenten (a) bis (d). Die Rezeptur bzw. der praktische Ansatz ist wie folgt:

| | | |
|---|---|---|
| Rezeptur | Styropor (0 - 8 mm) | 17,4 kg |
| | Zement DEM I 42,5 R | 465,0 kg |
| | Erfindungsgemäßes Betonzusatzmittel mit den Komponenten (a) bis (d) und (f) (Hydrotherm® S) (103,65 g Zusatzmittel / 100 kg Zement und Zuschlagsstoff) | 0,5 kg |
| | Wasser (ca. Angabe, je nach Verwendung) | ± 309,0 kg |
| | Mischzeit (ca. Angabe, je nach Mischerart) | 4 Minuten |

Der obige Beton wurde in üblicherweise hergestellt und zeigt die folgenden technischen Daten:

### Microporenbeton Hydromtherm® S

| | | |
|---|---|---|
| Technische Daten Frischbeton | Rohdichte | 0,79kg/dm³ |
| | Luftporengehalt | ≥ 22 Vol.-% |
| | Ausbreitmaß | ± 45 cm^{ø} |
| | Volumen Microporenbeton pro t Trockenmaterial *(Zement, Zuschläge)* | 2,07 m³ |
| | Verarbeitbarkeit | 30 min |
| | Pump- und/oder fließfähig sowie | sehr gut |
| | Mindestquerschnitt des Schlauches | (Ø 80 mm) |

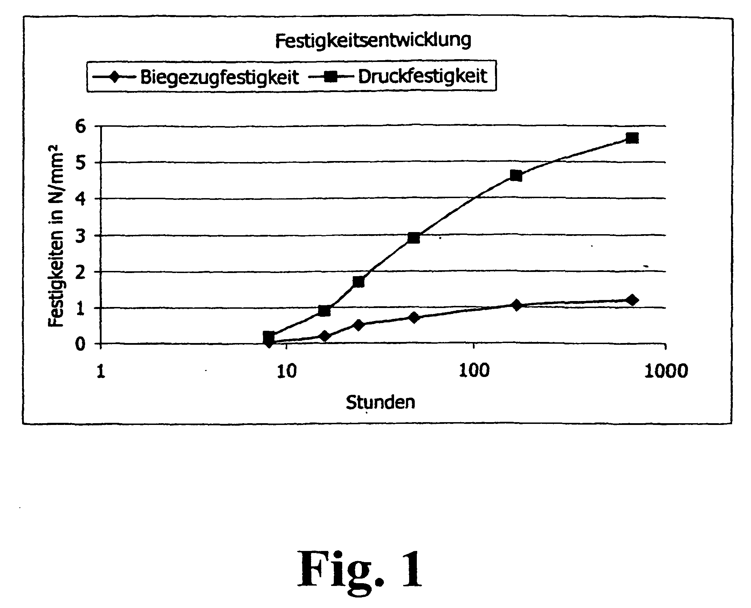

In Figur 1 zeigt sich die Festigkeitsentwicklung (Biegezugfertigkeit/Druckfertigkeit) des gemäß dem obigen Ansatz hergestellten Microporenbetons Hydrotherm® S.

| | | |
|---|---|---|
| Technische Daten | Rohdichte (28 Tage) | 0,69 kg/dm ³ |
| | Druckfestigkeit (28 Tage) | 5,66 N/mm ² |
| | Biegezugfestigkeit (28 Tage) | 1,2N/mm ² |
| | Materialschwund in % | > 0,15% |
| | Porosität | ≥ 65 Vol.-% |
| | Wasserdampfdiffusion | < 8 µ |
| | Wärmeleitfähigkeit in λ _{R} [W/mK] *(Betondicke 40 mm)* | 0,14 |
| | Brandverhalten | nicht brennbar unempfindlich gegen Druck- und Sicherwasser gemäß DIN 18 195 zu schützen |
| | Rissebildung bei Temperaturschwankungen | |
| | Wie verhält sich das Material im Erdreich | |

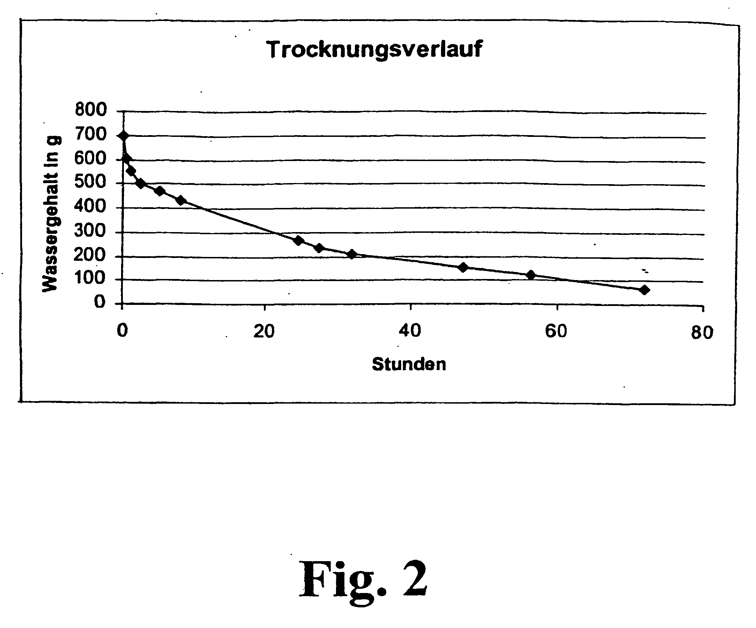

Figur 2 zeigt die Feuchtigkeitsaufnahme und -abgabe.

### Beispiel 2 (erfindungsgemäß)

Ein weiterer praktischer Ansatz einer anderen Ausführungsform ist wie folgt:

| | | |
|---|---|---|
| Rezeptur: | Styropor (0 - 8 mm) | 12,14 kg |
| | Zement CEM I 42,5 R | 340,0 kg |
| | Erfindungsgemäßes Betonzusatzmittel mit den Komponenten (a) bis (d) und (f) (Hydrotherm® S) (238,5 g Zusatzmittel / 100 kg Zement und Zuschlagsstoff) | 0,84 kg |
| | Wasser (ca. Angabe, je nach Verwendung) | ± 170,0 kg |
| | Mischzeit (ca. Angabe, je nach Mischerart) | 4 Minuten |
| | | |
| Technische Daten Frischbeton | Rohdichte | 0,52kg/dm³ |
| | Luftporengehalt | ≥ 40 Vol.-% |
| | Ausbreitmaß | ± 50 cm^{ø} |
| | Volumen MicroPorenbeton pro t Trockenmaterial (Zement, Zuschläge) | 2,84 m³ |
| | Verarbeitbarkeit | 30 min |
| | Pump- und/oder fließfähigt sowie | sehr gut |
| | Mindestquerschnitt des Schlauches | (Ø 80 mm) |

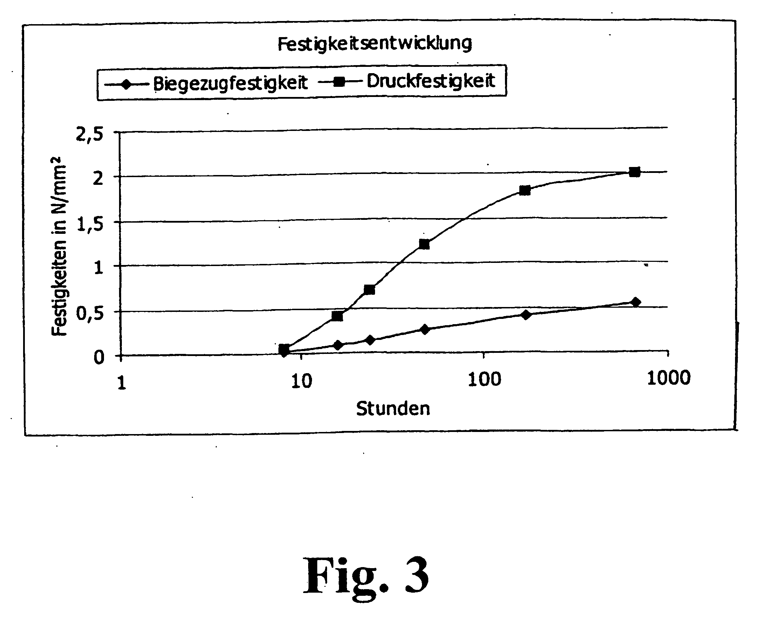

Figur 3 zeigt die Festigkeitsentwicklung des hergestellten Betons.

| | | |
|---|---|---|
| Technische Daten | Rohdichte (28 Tage) | 0,46 kg/dm ³ |
| | Druckfestigkeit (28 Tage) | 2,0 N/mm ² |
| | Biegezugfestigkeit (28 Tage) | 0,55N/mm ² |
| | Materialschwund in % | > 0,15% |
| | Porosität | ≥ 75 Vol.-% |
| | Wasserdampfdiffusion | < 8 µ |
| | Wärmeleitfähigkeit in λ _{R} [W/mK] *(Betondicke 40 mm)* | 0,11 |
| | Brandverhalten | nicht brennbar unempfindlich gegen Druck- und Sicherwasser gemäß DIN 18 195 zu schützen |
| | Rissebildung bei Temperaturschwankungen | |
| | Wie verhält sich das Material im Erdreich | |

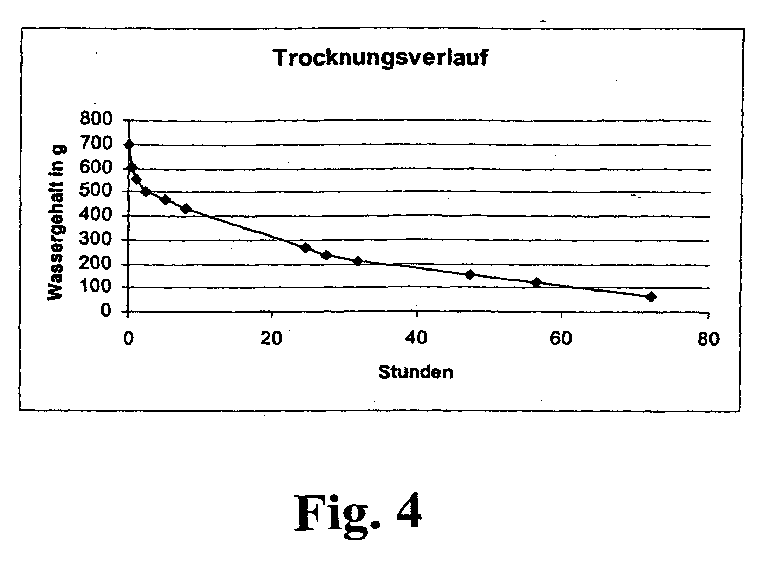

Figur 4 zeigt die Feuchtigkeitsaufnahme und -abgabe des Betons.

### Beispiel 3 (erfindungsgemäß)

Im folgende wird ein Beispiel zur Herstellung von Microporenbeton Hydrotherm® SV beschrieben.

| | | |
|---|---|---|
| Rezeptur: | Styropor (0 - 1 mm) | 9,03 kg |
| | Trockenschüttdichte 22,5 kg/dm ³ | |
| | Zement CEM II 42,5 A-L | 200,63 kg |
| | Schwenk | |
| | Erfindungsgemäßes Betonzusatzmittel | |
| | mit den Komponenten (a) bis (f) (Hydrotherm® SV) | 2,01 kg |
| | (958,7 g Zusatzmittel / 100 kg Zement und Zuschlagsstoff) | |
| | Wasser (ca. Angabe, je nach Verwendung) | ± 108,0 kg |
| | Mischzeit (ca. Angabe, je nach Mischart) | 4 Minuten |
| | | |
| Technische Daten Frischbeton | Rohdichte | 0,32 kg/dm ³ |
| | Luftporengehalt | ≥ 50 Vol.-% |
| | Ausbreitmaß | ± 10 cm ^{ø} |
| | Volumen Microporenbeton pro t Trockenmaterial | 3,12 m ³ |
| | (Zement, Zuschläge) | |
| | Verarbeitbarkeit | 30 min |
| | Pump- und/oder fließfähig sowie | sehr gut |
| | Mindestquerschnitt des Schlauches | (Ø 80 mm) |

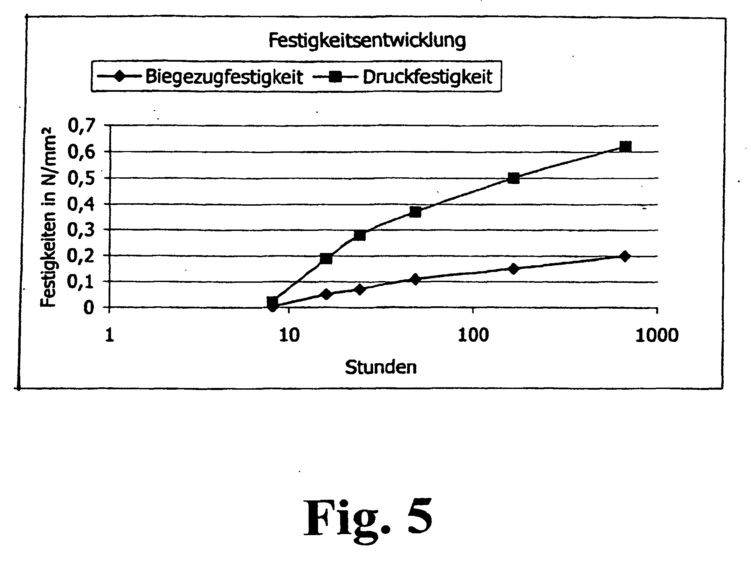

Figur 5 zeigt die Festigkeitsentwicklung des hergestellten Betons.

| | | |
|---|---|---|
| Technische Daten | Rohdichte (28 Tage) | 0,22 kg/dm³ |
| | Druckfestigkeit (28 Tage) | 0,66 N/mm² |
| | Biegezugfestigkeit (28 Tage) | 0,21 N/mm² |
| | Materialschwund in % | > 0,10% |
| | Porosität | ≥ 85 Vol.-% |
| | Wasserdampfdiffusion | < 16 µ |
| | Wärmeleitfähigkeit in λ_{R}[W/mK] *(Betondicke 40 mm)* | 0,09 |
| | Brandverhalten | nicht brennbar unempfindlich gegen Druck- und Sicherwasser gemäß DIN 18 195 zu schützen |
| | Rissebildung bei Temperaturschwankungen | |
| | Wie verhält sich das Material im Erdreich | |

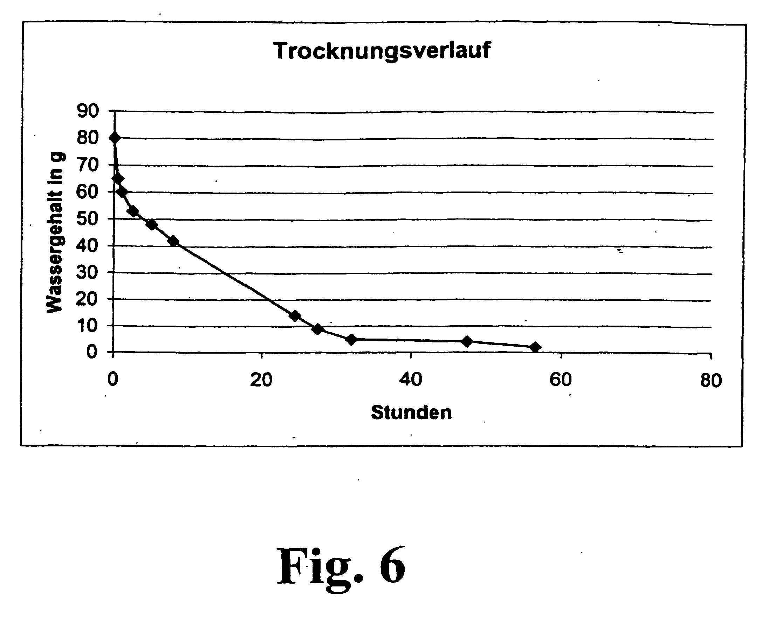

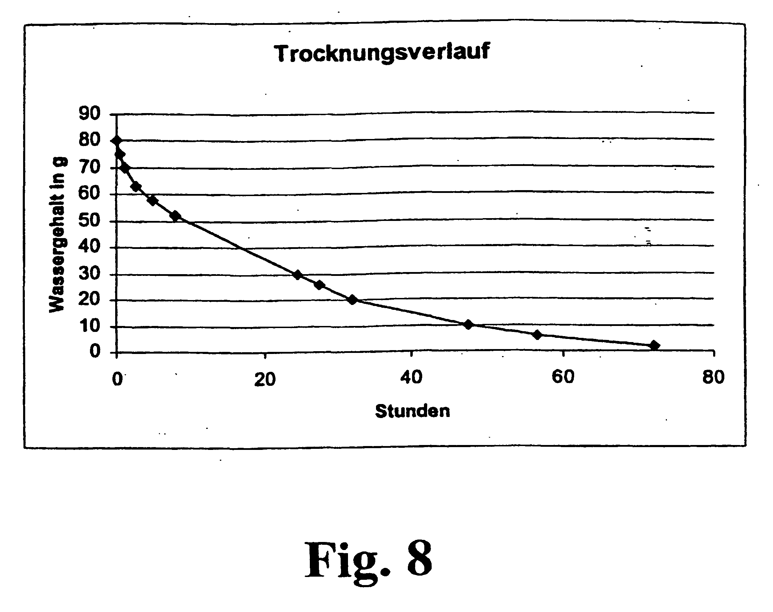

Figur 6 zeigt die Feuchtigkeitsaufnahme und -abgabe des Betons.

### Beispiel 4 (erfindungsgemäß)

Ein weiterer Ansatz zur Herstellung eines Microporenbeton Hydrotherm® SV ist wie folgt:

| | | |
|---|---|---|
| Rezeptur | Blähton (4 - 8 mm) | 280,00 kg |
| | *Trockenschüttdichte 0,375 kg*/*dm*^{*3*} | |
| | Sand (0,1 - 0,5 mm) | 280,00 kg |
| | *Trockenschüttdichte 1,4 kg*/*dm*^{*3*} | |
| | Zement CEM 152,5 R | 280,00 kg |
| | Erfindungsgemäßes Betonzusatzmittel | |
| | mit den Komponenten (a) bis (f) (Hydrotherm® SV) | 1,1 kg |
| | (196,4 g Zusatzmittel /100 kg Zement und Zuschlagsstoff) | |
| | Wasser (ca. Angabe, je nach Verwendung) | ± 130,0 kg |
| | Mischzeit (ca. Angabe, je nach Mischerart) | 4 Minuten |

| | | |
|---|---|---|
| Technische Daten | Rohdichte | 1,3 kg/dm³ |
| Frischbeton | Luftporengehalt | ≥ 23 Vol.-% |
| | Ausbreitmaß | ± 10 cm^{Ø} |
| | Volumen MicroPorenbeton pro t Trockenmaterial *(Zement, Zuschläge)* | 0,96 m³ |
| | Verarbeitbarkeit | 30 min |
| | Pump- und/oder fließfähig sowie | sehr gut |
| | Mindestquerschnitt des Schlauches | (Ø 80 mm) |

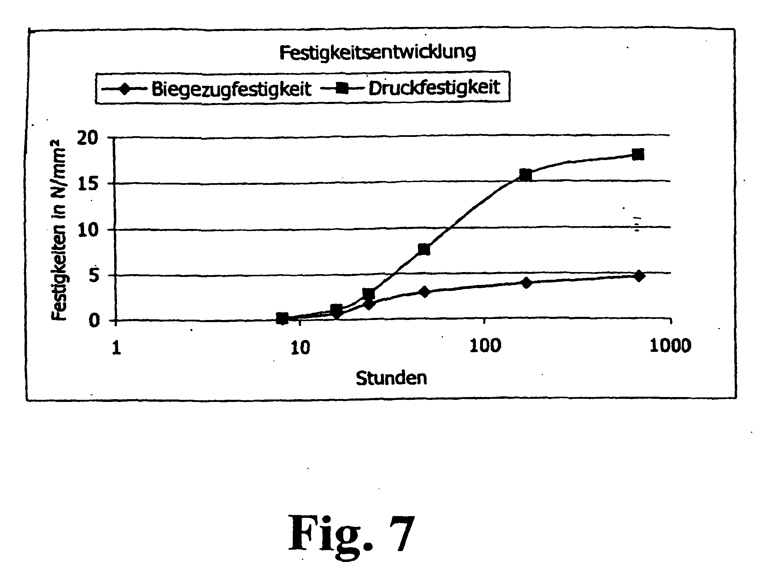

Figur 7 zeigt die Festigkeitsentwicklung des Betons.

| | | |
|---|---|---|
| Technische Daten | Rohdichte (28 Tage) | 1,25 kg/dm³ |
| | Druckfestigkeit (28 Tage) | 17,9 N/mm² |
| | Biegezugfestigkeit (28 Tage) | 4,6 N/mm² |
| | Materialschwund in % | > 0,10% |
| | Porosität | ≥ 30 Vol.-% |
| | Wasserdampfdiffusion | < 16 µ |
| | Wärmeleitfähigkeit in λ_{R}[W/mK] *(Betondicke 40 mm)* | 0,30 |
| | Brandverhalten | nicht brennbar unempfindlich gegen Druck- und Sicherwasser gemäß DIN 18 195 zu schützen |
| | Rissebildung bei Temperaturschwankungen | |
| | Wie verhält sich das Material im Erdreich | |

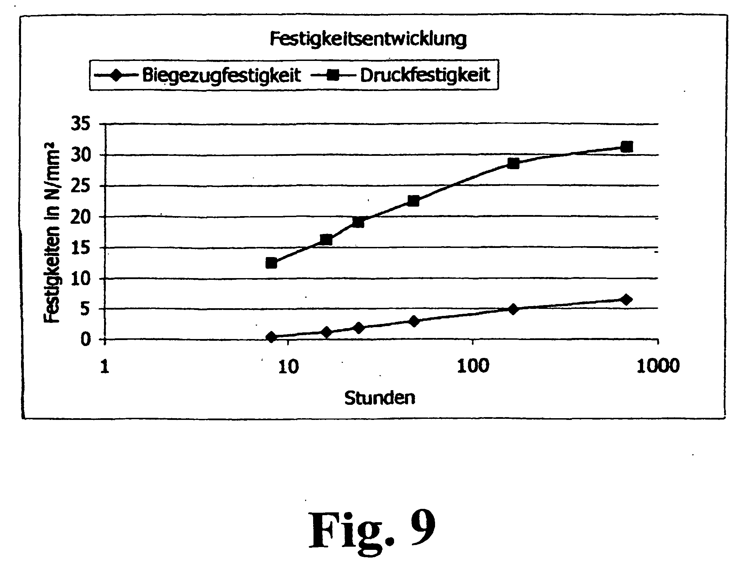

Figur 8 zeigt die Feuchtigkeitsaufnahme und -abgabe des Betons.

### Beispiel 5 (erfindungsgemäß)

Ein praktischer Ansatz zur Herstellung von Microporenbeton Hydrotherm SV ist wie folgt:

| | | |
|---|---|---|
| Rezepturvorschlag | Sand (0 - 2 mm) | 1140,0 kg |
| | Zement CEM I 42,5 R | 470,00 kg |
| | Erfindungsgemäßes Betonzusatzmittel | |
| | mit den Komponenten (a) bis (f) (Hydrotherm® SV) (50,3 g Zusatzmittel / 100 kg Zement und Zuschlagsstoff) | 0,81 kg |
| | Wasser (ca. Angabe, je nach Verwendung) | ± 220,0 kg |
| | Mischzeit (ca. Angabe, je nach Mischerart) | 3 Minuten |

| | | |
|---|---|---|
| Technische Daten | Rohdichte | 1,83 kg/dm³ |
| Frischbeton | Luftporengehalt | ≥ 18 Vol.-% |
| | Ausbreitmaß | ± 16,5 cm^{Ø} |
| | Volumen MicroPorenbeton pro t Trockenmaterial *(Zement, Zuschläge)* | 0,55 m³ |
| | Verarbeitbarkeit | 30 min |
| | Pump- und/oder fließfähig sowie | sehr gut |
| | Mindestquerschnitt des Schlauches | (Ø 80 mm) |

Figur 9 zeigt die Festigkeitsentwicklung des Betons.

| | | |
|---|---|---|
| Technische Daten | Rohdichte (28 Tage) | 1,83 kg/dm³ |
| | Druckfestigkeit (28 Tage) | 31,34 N/mm² |
| | Biegezugfestigkeit (28 Tage) | 6,47 N/mm² |
| | Materialschwund in % | > 0,05% |
| | Porosität | ≥ 18 Vol.-% |
| | Wasserdampfdiffusion | < 12 µ |
| | Wärmeleitfähigkeit in λ_{R}[W/mK] *(Betondicke 40 mm)* | 0,50 |
| | Brandverhalten | nicht brennbar unempfindlich gegen Druck- und Sicherwasser gemäß DIN 18 195 zu schützen |
| | Rissebildung bei Temperaturschwankungen | |
| | Wie verhält sich das Material im Erdreich | |

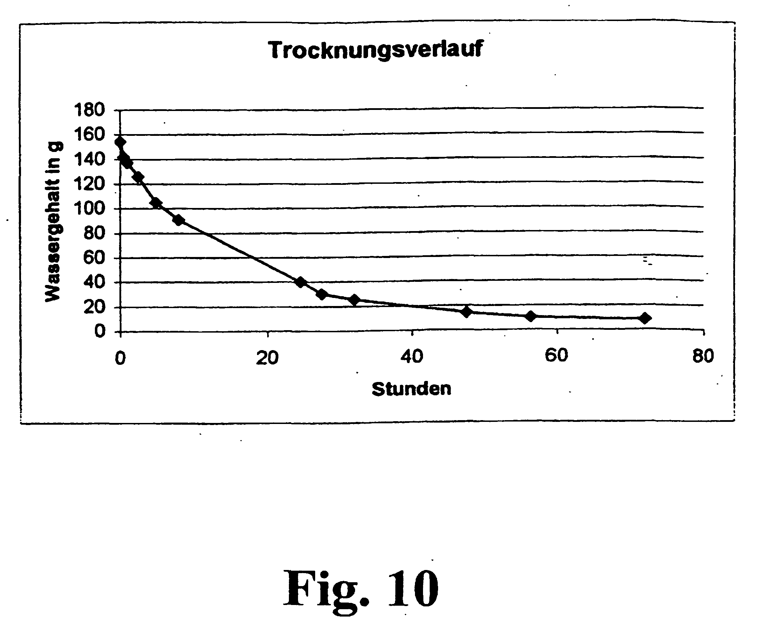

Figur 10 zeigt die Feuchtigkeistaufnahme und -abgabe des Betons.

Aus dem obigen Beispiel 5 geht hervor, dass ein sehr geringer Materialschwund beim fertigen Beton nach 28 Tagen resultiert. Weiterhin resultieren sehr gute mechanische Werte, wie aus der obigen Tabelle hervorgeht.

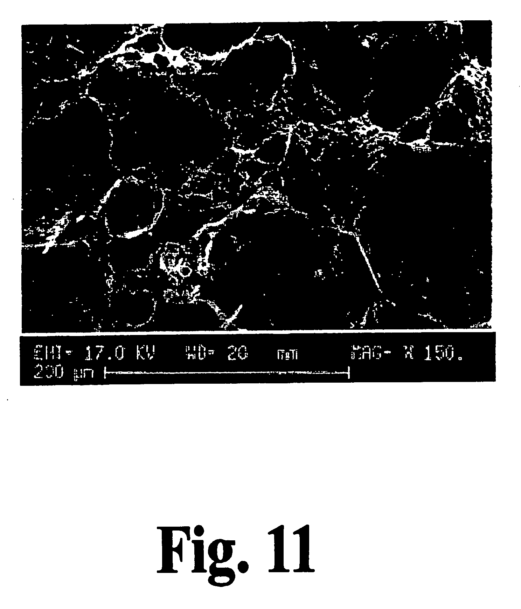

Figur 11 zeigt eine REM-Aufnahme des erfindungsgemäßen Mikroporenbetons gemäß Beispiel 5 mit einem Porendurchmesser im Durchschnitt von 0,5 µm und Feinkapillaren im µm-Bereich.

## Patentansprüche

1. Porenbildendes Betonzusatzmittel, welches oberflächenaktive Mittel enthält, umfassend:
(a) 10 bis 50 Gew.-% an anionischen Na-Salzen von Alkylnaphthalinsulfonsäuren,
(b₁) 20 bis 75 Gew.-% an Natrium-Salzen von Alkylphenoläthersulfat und/oder Alkylbenzolsulfonat oder
(b₂) 20 bis 75 Gew.-% an Natriumsalzen von sulfatiertem C₁₂ bis C₁₅-Oxoalkoholpolyglykoläther,
(c) 10 bis 40 Gew.-% an einem Styrolmischpolymer mit einer Säurezahl von 5 bis 15, wie es zur Herstellung von wäßrigen Kunstoffdispersionen geeignet ist,
(d) 10 bis 35 Gew.-% eines Formaldehyd-Melamin-Na-Hydrogensulfit-Copolymers.

2. Betonzusatzmittel gemäß Anspruch 1, **dadurch gekennzeichnet, dass** die Komponenten (a), (b₁), (b₂), (c) und (d) jeweils in feinpulveriger, trockener Form eingesetzt sind.

3. Betonzusatzmittel gemäß Anspruch 1 oder 2, **dadurch gekennzeichnet, dass** Komponente (c) aus der butadienfreiem Styrolmischpolymer mit einer Säurezahl von 5 bis 15 besteht.

4. Betonzusatzmittel nach Anspruch 3, **dadurch gekennzeichnet, dass** Komponente (c) aus Styrol-/Acrylsäure-Mischpolymer oder Styrol-/Acrylsäureester-/Acrylsäure-Mischpolymer mit einer Säurezahl von 8 bis 12 besteht.

5. Betonzusatzmittel gemäß einem der Ansprüche 1 bis 4, **dadurch gekennzeichnet, dass** die Menge der Komponente (a) 30 bis 40 Gew.-%, der Komponente (b₁) oder (b₂) 40 bis 60 Gew.-%, der Komponente (c) 10 bis 20 Gew.-% und der Komponente (d) 10 bis 35 Gew.-% beträgt.

6. Betonzusatzmittel gemäß einem der Ansprüche 1 bis 5, **dadurch gekennzeichnet, dass** es mit einem weiteren inerten Träger verdünnt ist.

7. Betonzusatzmittel gemäß einem oder mehreren der Ansprüche 1 bis 6, **dadurch gekennzeichnet, dass** es weiter folgende Komponenten enthält:
(e) 7 bis 15 Gew.-% einer leimfreien hochkonzentrierten Paraffindispersion, und/oder
(f) 7 bis 15 Gew.-% an Natrium-Salzen eines Naphthalinsulfonsäure-FormaldehydKondensationsproduktes.

8. Betonzusatzmittel gemäß Anspruch 7, **dadurch gekennzeichnet, dass** die Komponenten (a), (b₁), (b₂),(c), (d) und (e) jeweils in feinpulvriger, trockener Form eingesetzt sind.

9. Porenbildender Baustoff auf Betonbasis, umfassend ein Gemisch von
(A) 100 kg eines Gemisches aus Zement und Betonzuschlag, und
(B) 40 bis 1000 g pro 100 kg Betonzuschlag-Zementmischung eines Zusatzmittels, umfassend:
(a) 10 bis 50 Gew.-% an anionischen Na-Salzen von Alkylnaphthalinsulfonsäuren,
(b₁) 20 bis 75 Gew.-% an Natrium-Salzen von Alkylphenoläthersulfat und/oder Alkylbenzolsulfonat oder
(b₂) 20 bis 75 Gew.-% an Natrium-Salzen von sulfatiertem C₁₂ bis C₁₅-Oxoalkoholpolyglykoläther,
(c) 10 bis 40 Gew.-% an einem Styrolmischpolymer mit einer Säurezahl von 5 bis 15, wie es zur Herstellung von wäßrigen Kunstoffdispersionen geeignet ist,
(d) 10 bis 35 Gew.-% eines Formaldehyd-Melamin-Na-Hydrogensulfit-Copolymers.

10. Porenbildender Baustoff gemäß Anspruch 9, **dadurch gekennzeichnet, dass** das Zusatzmittel in einer Menge von 40 bis 240 g pro 100kg der Betonzuschlag-Zementmischung vorhanden ist.

11. Porenbildender Baustoff gemäß Anspruch 9 oder 10, **dadurch gekennzeichnet, dass** der Betonzuschlag ausgewählt wird aus der Gruppe, bestehend aus Sand, insbesondere Quarzsand, Polystyrol, Blähglas, Blähton, Holzspänen.

12. Porenbildender Baustoff gemäß einem der Ansprüche 9 bis 11, **dadurch gekennzeichnet, dass** er ein Porenvolumen von 30 bis 80 Vol.-% aufweist.

13. Bauelement, **dadurch gekennzeichnet, dass** es aus dem porenbildenden Baustoff gemäß einem oder mehreren der Ansprüche 9 bis 12 herstellbar ist.

## Claims

1. Pore-forming concrete addition agent, which contains surface-active agents, including
(a) 10 to 50 % by wt. of anionic Na salts of alkyl naphthaline sulphonic acids,
(b₁) 20 to 75 % by wt. of sodium salts of alkyl phenol ether sulphate and/or alkyl benzene sulphonate or
(b₂) 20 to 75 % by wt. of sodium salts of sulphated C₁₂ to C₁₅ oxoalcohol polyglycol ether,
(c) 10 to 40 % by wt. of a styrene mixed polymer with an acid number of 5 to 15, such as is suitable for producing aqueous plastics material dispersions, and
(d) 10 to 35 % by wt. of a formaldehyde-melamine-Na-hydrogen sulphite copolymer.

2. Concrete addition agent according to claim 1, **characterised in that** the components (a), (b₁), (b₂), (c) and (d) are each used in a finely pulverulent, dry form.

3. Concrete addition agent according to claim 1 or 2, **characterised in that** component (c) comprises the butadiene-free styrene mixed polymer with an acid number of 5 to 15.

4. Concrete addition agent according to claim 3, **characterised in that** component (c) comprises a styrene/acrylic acid mixed polymer or a styrene/acrylic acid ester/acrylic acid mixed polymer with an acid number of 8 to 12.

5. Concrete addition agent according to one of claims 1 to 4, **characterised in that** the quantity of component (a) is 30 to 40 % by wt. of, the quantity of component (b₁) or (b₂) is 40 to 60 % by wt., the quantity of component (c) is 10 to 20 % by wt., and the quantity of component (d) is 10 to 35 % by wt.

6. Concrete addition agent according to one of claims 1 to 5, **characterised in that** it is diluted with an additional inert carrier.

7. Concrete addition agent according to one or more of claims 1 to 6, **characterised in that** it also contains the following components:
(e) 7 to 15 % by wt. of a glue-free, highly concentrated paraffin dispersion, and/or
(f) 7 to 15 % by wt. of sodium salts of a naphthaline sulphonic acid formaldehyde condensation product.

8. Concrete addition agent according to claim 7, **characterised in that** the components (a), (b₁), (b₂), (c), (d) and (e) are each used in a finely pulverulent, dry form.

9. Pore-forming building material based on concrete, including a mixture of
(A) 100 kg of a mixture of cement and concrete addition, and
(B) 40 to 1000 g per 100 kg of a concrete addition/cement mixture of an addition agent, including:
(a) 10 to 50% by wt. of anionic Na salts of alkyl naphthaline sulphonic acids,
(b₁) 20 to 75 % by wt. of sodium salts of alkyl phenol ether sulphate and/or alkyl benzene sulphonate or
(b₂) 20 to 75 % by wt. of sodium salts of sulphated C₁₂ to C₁₅ oxoalcohol polyglycol ether,
(c) 10 to 40 % by wt. of a styrene mixed polymer with an acid number of 5 to 15, such as is suitable for producing aqueous plastics material dispersions, and
(d) 10 to 35 % by wt. of a formaldehyde-melamine-Na-hydrogen sulphite copolymer.

10. Pore-forming building material according to claim 9, **characterised in that** the addition agent is present in a quantity of between 40 and 240 g per 100 kg of the concrete addition/cement mixture.

11. Pore-forming building material according to claim 9 or 10, **characterised in that** the concrete addition is selected from the group comprising sand, more especially quartz sand, polystyrene, blown gas, expanded clay and wood chips.

12. Pore-forming building material according to one of claims 9 to 11, **characterised in that** it has a pore volume of 30 to 80 % by vol.

13. Building element, **characterised in that** it can be produced from the pore-forming building material according to one or more of claims 9 to 12.

## Revendications

1. Additif formant des pores pour béton, qui contient un agent actif en surface, comprenant :
(a) 10 à 50% en poids de sels de Na anioniques d'acides alkylnaphtaline-sulfoniques,
(b₁) 20 à 75% en poids de sels de sodium de sulfate d'éther alkylphénolique et/ou de sulfonate de benzole alkylé ou
(b₂) 20 à 75% en poids de sels de sodium de polyglycoléther d'oxoalcool sulfaté en C₁₂ à C₁₅,
(c) 10 à 40% en poids d'un mélange polymère de styrol avec un nombre d'acides allant de 5 à 15, tel qu'il est adapté pour la fabrication de dispersions plastiques aqueuses,
(d) 10 à 35% en poids d'un copolymère formaldehyde-mélamine-Na-sulfite d'hydrogène.

2. Additif pour béton selon la revendication 1, **caractérisé en ce que** les composants (a), (b₁), (b₂), (c) et (d) sont employés chacun sous une forme déshydratée en poudre fine.

3. Additif pour béton selon la revendication 1 ou 2, **caractérisé en ce que** les composants (c) sont constitués d'un mélange polymère de styrol sans butadiène avec un nombre d'acides allant de 5 à 15.

4. Additif pour béton selon la revendication 3, **caractérisé en ce que** les composants (c) sont constitués du mélange polymère styrol/acide acrylique ou du mélange polymère styrol/ester d'acide acrylique/acide acrylique avec un nombre d'acides allant de 8 à 12.

5. Additif pour béton selon l'une des revendications 1 à 4, **caractérisé en ce que** la quantité de composants (a) comprend de 30 à 40% en poids, des composants (b₁) ou (b₂) de 40 à 60% en poids, des composants (c) de 10 à 20% en poids et des composants (d) de 10 à 35% en poids.

6. Additif pour béton selon l'une des revendications 1 à 5, **caractérisée en ce qu'**il est dilué avec un autre véhicule inerte.

7. Additif pour béton selon l'une ou plusieurs des revendications 1 à 6, **caractérisé en ce qu'**il contient en outre les composants suivants :
(e) 7 à 15% en poids d'une dispersion de paraffine très concentrée sans adhésif, et/ou
(f) 7 à 15% en poids de sels de sodium d'un produit de condensation d'acide naphtaline-sulfonique-formaldehyde.

8. Additif pour béton selon la revendication 7, **caractérisé en ce que** les composants (a), (b₁), (b₂), (c), (d) et (e) sont chacun employés sous une forme déshydratée en poudre fine.

9. Matériau formant des pores à base de béton, comprenant un mélange de (A) 100 kg d'un mélange de ciment et d'adjuvant de béton et (B) de 40 à 1000 g d'additif pour 100 kg de mélange ciment-adjuvant de béton, comprenant :
(a) 10 à 50% en poids de sels de Na anioniques d'acides alkylnaphtaline-sulfoniques,
(b₁) 20 à 75% en poids de sels de sodium de sulfate d'éther alkylphénolique et/ou de sulfonate de benzole alkylé ou
(b₂) 20 à 75% en poids de sels de sodium de polyglycoléther d'oxoalcool sulfaté en C₁₂ à C₁₅,
(c) 10 à 40% en poids d'un mélange polymère de styrol avec un nombre d'acides allant de 5 à 15, tel qu'il est adapté pour la fabrication de dispersions plastiques aqueuses,
(d) 10 à 35% en poids d'un copolymère formaldehyde-mélamine-Na-sulfite d'hydrogène.

10. Matériau formant des pores selon la revendication 9, **caractérisé en ce que** l'additif est présent dans une quantité allant de 40 à 240 g pour 100 kg de mélange ciment-adjuvant de béton.

11. Matériau formant des pores selon la revendication 9 ou 10, **caractérisé en ce que** l'adjuvant de béton est choisi dans le groupe constitué de sable, en particulier de sable de carrière, de polystyrol, de verre expansé, d'argile expansé, de copeaux de bois.

12. Matériau formant des pores selon l'une des revendications 9 à 11, **caractérisé en ce qu'**il présente un volume poreux de 30 à 80% du volume.

13. Elément de construction **caractérisé en ce qu'**il peut être fabriqué à partir du matériau formant des pores selon l'une ou plusieurs des revendications 9 à 12.
